# EUROPEAN PATENT APPLICATION

(11) **EP 3 955 111 A1**
(43) Date of publication of application: **16.02.2022**
(21) Application number: 21193625.7
(22) Date of filing: 27.06.2017
(51) Int. Cl.: G06F 9/50

(54) **SYSTEM AND METHOD FOR SCALING APPLICATION CONTAINERS IN CLOUD ENVIRONMENTS**

(30) Priority: 07.07.2016 US 201615204691
(62) Divisional of application: 17737152.3
(71) Applicant: Cisco Technology, Inc., San Jose, CA 95134 (US)
(72) Inventor: SEETHARAMAIAH, Shashidhara, San Jose, 95134 (US); R. RAM, Mohan, San Jose, 95134 (US); SALGUEIRO, Gonzalo, San Jose, 95134 (US)
(74) Representative: Cole, Douglas Lloyd

(57) **Abstract**

Disclosed is a method in which a plurality of applications providing a plurality of services are operated in a cloud infrastructure. A service specific manager operating on a software container in the cloud infrastructure polls each of the services to yield respective polled data for each service. For each service, the polled data comprises service parameters and resource usage relating to the service and is obtained from the service using a service specific protocol. The service specific manager collates the respective polled data for each service to yield a collation. Based on the collation, a respective weight for each service is derived which a container manager can use to create multiple instances of a new service. The weight is represented as a service independent parameter. The respective weight for each service is communicated to the container manager which then determines whether to scale up or scale down container services based on the respective weight for each service. A scaling operation is then performed in accordance with the determination.

## Description

### TECHNICAL FIELD

The disclosure relates generally to computer networking tools and particularly to a system and method of scaling application containers in a cloud environment.

### BACKGROUND

Automatic horizontal scaling of application containers in a cloud environment is a tricky problem. Current solutions/architectures, like "DOCKERSWARM", "KUBERNETES", and "CLOUDIFY", provide mechanisms to monitor parameters like performance of the central processing unit (CPU), memory, filesystem, and network usage statistics and different levels (like containers, pods, clusters, individual services) and use the information learned to automatically scale up/down cloud applications. This mechanism of monitoring generic parameters (mentioned above) may not always work efficiently because of the various types of applications that may be hosted on the containers. For example, the current method may work well for web applications which typically involve simple requests and responses. For other applications, such as collaborations involving audio and/or video conferencing, data needs to be maintained for longer periods of time. In these scenarios, the current scaling approach is not as workable. Accordingly, the current solutions and approaches are limited and lack flexibility.

### BRIEF DESCRIPTION OF THE DRAWINGS

The disclosure will be readily understood by the following detailed description in conjunction with the accompanying drawings in which:
FIG. 1A illustrates the basic computing components of a computing device according to an aspect of this disclosure.
FIG. 1B illustrates a cloud network environment.
FIG. 2 illustrates the general context in which the present disclosure applies.
FIG. 3 illustrates a method aspect of the disclosure.

### DESCRIPTION OF EXAMPLE EMBODIMENTS

### OVERVIEW

Aspects of the invention are set out in the independent claims and preferred features are set out in the dependent claims. Features of one aspect may be applied to each aspect alone or in combination with other aspects.

Disclosed are systems, methods and computer-readable devices related to a system that provides a scaling mechanism with increased flexibility to include application characteristics and planned or predicted application usage (apart from generic parameters). The disclosed approach can provide improved scaling particularly in services that provide collaboration sessions like audio and/or video conferencing. Additional parameters that are contemplated beyond the generic parameters can include session type, such as audio/video, where a video session may need more bandwidth than an audio session. Different aspects of a respective service will have different requirements or needs in the cloud system. Geographical regions based on legal considerations can also be another parameter. In another aspect, assume a company provides a service of broadcasting video and/or audio. The system can access information in a scheduling calendar and predict how many more service instances are required to support the broadcasting and scale up the cloud for a particular scheduled event. The scaling could also be a scale down to save energy or power.

For the purposes of illustrating this idea, a cloud infrastructure hosting a collaboration farm (such as SPARK) is used. However, the concepts disclosed herein are applicable to any service/application that can be hosted from the cloud. It is expected that each service farm has its own service-specific manager that monitors the service farm and converts the service parameters particular to that service (service feedback) into generic parameters for further processing by a container manager. In this way, the infrastructure can be agnostic to the service that is running on top of it and scalability is improved for the various services.

It is also possible to have just one service-specific manager for all related service farms. For example, all IP telephony call service farms can just have one service-specific manager as the set of technologies / parameters needed to be measured may be common among many of them. This concept of course can apply to any particular service across multiple service farms.

An example aspect includes a method practiced by various components in a cloud infrastructure. The method includes polling, via a service specific manager operating on a software container (e.g., DOCKER container) in a cloud infrastructure, usage of different application resources and parameters for each service of a plurality of services provided. Examples of parameters that are provided as feedback from the various services include resource usage, application usage, number of sessions, codecs used for communicating data, bandwidth used, storage used for recording a communication session, number of participants in an audio/video/web-based communication, processing requirements, performance requirements, memory requirements, legal requirements, etc. A software container is a form of virtualization that allows the hardware power to be shared among different users and appear as separate servers or machines. Software containers can virtualize the operating system, splitting it into virtualized compartments to run container applications. The service specific manager collates the respective polled data for each service to yield a collation.

Based on the collation, the method includes deriving a respective weight for each service which a container manager can use to create multiple instances of a new service, communicating the respective weight for each service (or each feedback parameter reported from a respective service) to the container manager. The method next includes determining, via the container manager, whether to scale up or scale down container services based on the respective weight for each service. The method can also include receiving, at the service specific manager, external data and combining the external data into the collation. The external data can include a number of different types of data. For example, but not meant to be limiting, the external data can be from one or more of an email source, a calendaring source, a social networking source, a messaging source, a news source, a weather source, and a conferencing source.

The system can predict a future event based on at least one of the external data and the respective polled data. The system can combine the future event with the collation and adjust the respective weight such that the scaling up or scaling down of container services can be accordingly based at least in part oil application characteristics, and/or planned usage.

In one aspect, the respective weight for each service can include a tuple of values. The tuple of values can be a parameter based on one or more of a service identification parameter, a weight value, a location value, a preferred location value, a bandwidth value, a memory value, a time-related value, a starting value, a predicted ending value, a type of data, a calendar event, a compliance value, a country value, a codec, a participant value, a number of participants, a quality of service value, a cost value, a throttling value, a reputation score, etc. The tuple of values is structured to be a generic set of values that is service independent.

### DESCRIPTION

Disclosed are systems, methods and computer-readable devices related to a system that address the issues and the art and provide a mechanism for scaling up or scaling down with increased flexibility. The system can include feedback from various services, and optionally external data, to process the received feedback to enable a scaling operation and even provide predictive scaling based on anticipated events. The concepts disclosed herein provide a more intelligent and fine-tuned scaling particularly for services with more complicated needs than just web services. By utilizing various parameters such as session type (e.g., audio, video, real-time, asynchronous, data transfer, etc.), legal needs, geographic needs, and so forth, the system can provide an improved scaling efficiency and provide more advanced scaling tailored to particular services.

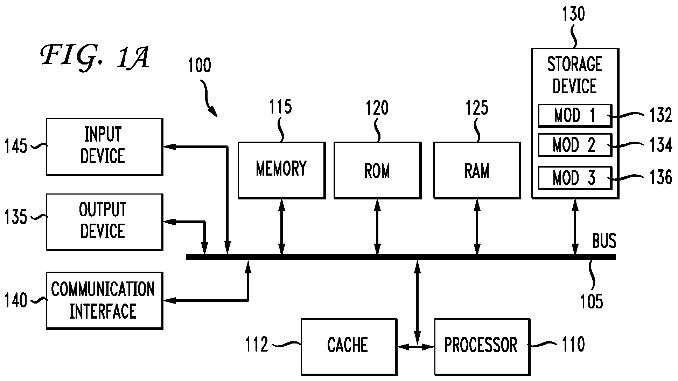

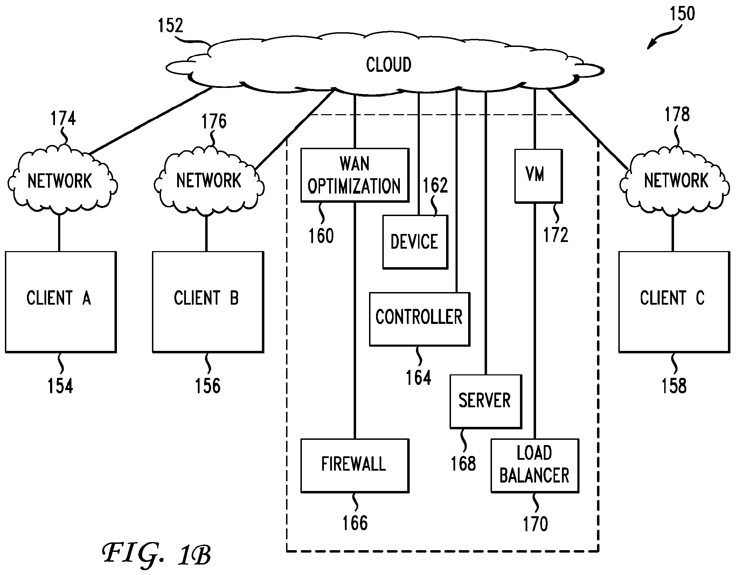

The disclosure first turns to FIG. 1 which discloses some basic hardware components that can apply to system examples of the present disclosure. With reference to FIG. 1, an exemplary system and/or computing device 100 includes a processing unit (CPU or processor) 110 and a system bus 105 that couples various system components including the system memory 115 such as read only memory (ROM) 120 and random access memory (RAM) 125 to the processor 110. The system 100 can include a cache 112 of high-speed memory connected directly with, in close proximity to, or integrated as part of the processor 110. The system 100 copies data from the memory 115, 120, and/or 125 and/or the storage device 130 to the cache 112 for quick access by the processor 110. In this way, the cache provides a performance boost that avoids processor 110 delays while waiting for data. These and other modules can control or be configured to control the processor 110 to perform various operations or actions. Other system memory 115 may be available for use as well. The memory 115 can include multiple different types of memory with different performance characteristics. It can be appreciated that the disclosure may operate on a computing device 100 with more than one processor 110 or on a group or cluster of computing devices networked together to provide greater processing capability. The processor 110 can include any general purpose processor and a hardware module or software module, such as module 1 132, module 2 134, and module 3 136 stored in storage device 130, configured to control the processor 110 as well as a special-purpose processor where software instructions are incorporated into the processor. The processor 110 may be a self-contained computing system, containing multiple cores or processors, a bus, memory controller, cache, etc. A multi-core processor may be symmetric or asymmetric. The processor 110 can include multiple processors, such as a system having multiple, physically separate processors in different sockets, or a system having multiple processor cores on a single physical chip. Similarly, the processor 110 can include multiple distributed processors located in multiple separate computing devices, but working together such as via a communications network. Multiple processors or processor cores can share resources such as memory 115 or the cache 112, or can operate using independent resources. The processor 110 can include one or more of a state machine, an application specific integrated circuit (ASIC), or a programmable gate array (PGA) including a field PGA.

The system bus 105 may be any of several types of bus structures including a memory bus or memory controller, a peripheral bus, and a local bus using any of a variety of bus architectures. A basic input/output system (BIOS) stored in ROM 120 or the like, may provide the basic routine that helps to transfer information between elements within the computing device 100, such as during start-up. The computing device 100 further includes storage devices 130 or computer-readable storage media such as a hard disk drive, a magnetic disk drive, an optical disk drive, tape drive, solid-state drive, RAM drive, removable storage devices, a redundant array of inexpensive disks (RAID), hybrid storage device, or the like. The storage device 130 is connected to the system bus 105 by a drive interface. The drives and the associated computer-readable storage devices provide nonvolatile storage of computer-readable instructions, data structures, program modules and other data for the computing device 100. In one aspect, a hardware module that performs a particular function includes the software component stored in a tangible computer-readable storage device in connection with the necessary hardware components, such as the processor 110, bus 105, an output device such as a display 135, and so forth, to carry out a particular function. In another aspect, the system can use a processor and computer-readable storage device to store instructions which, when executed by the processor, cause the processor to perform operations, a method or other specific actions. The basic components and appropriate variations can be modified depending on the type of device, such as whether the computing device 100 is a small, handheld computing device, a desktop computer, or a computer server. When the processor 110 executes instructions to perform "operations", the processor 110 can perform the operations directly and/or facilitate, direct, or cooperate with another device or component to perform the operations.

Although the exemplary embodiment(s) described herein employs a storage device such as a hard disk 130, other types of computer-readable storage devices which can store data that are accessible by a computer, such as magnetic cassettes, flash memory cards, digital versatile disks (DVDs), cartridges, random access memories (RAMs) 125, read only memory (ROM) 120, a cable containing a bit stream and the like, may also be used in the exemplary operating environment. According to this disclosure, tangible computer-readable storage media, computer-readable storage devices, computer-readable storage media, and computer-readable memory devices, expressly exclude media such as transitory waves, energy, carrier signals, electromagnetic waves, and signals per se.

To enable user interaction with the computing device 100, an input device 145 represents any number of input mechanisms, such as a microphone for speech, a touch-sensitive screen for gesture or graphical input, keyboard, mouse, motion input, speech and so forth. An output device 135 can also be one or more of a number of output mechanisms known to those of skill in the art. In some instances, multimodal systems enable a user to provide multiple types of input to communicate with the computing device 100. The communications interface 140 generally governs and manages the user input and system output. There is no restriction on operating on any particular hardware arrangement and therefore the basic hardware depicted may easily be substituted for improved hardware or firmware arrangements as they are developed.

For clarity of explanation, the illustrative system embodiment is presented as including individual functional blocks including functional blocks labeled as a "processor" or processor 110. The functions these blocks represent may be provided through the use of either shared or dedicated hardware, including, but not limited to, hardware capable of executing software and hardware, such as a processor 110, that is purpose-built to operate as an equivalent to software executing on a general purpose processor. For example the functions of one or more processors presented in FIG. 1 can be provided by a single shared processor or multiple processors. (Use of the term "processor" should not be construed to refer exclusively to hardware capable of executing software.) Illustrative embodiments may include microprocessor and/or digital signal processor (DSP) hardware, read-only memory (ROM) 120 for storing software performing the operations described below, and random access memory (RAM) 125 for storing results. Very large scale integration (VLSI) hardware embodiments, as well as custom VLSI circuitry in combination with a general purpose DSP circuit, may also be provided.

The logical operations of the various embodiments are implemented as: (1) a sequence of computer implemented steps, operations, or procedures running on a programmable circuit within a general use computer, (2) a sequence of computer implemented steps, operations, or procedures running on a specific-use programmable circuit; and/or (3) interconnected machine modules or program engines within the programmable circuits. The system 100 shown in FIG. 1 can practice all or part of the recited methods, can be a part of the recited systems, and/or can operate according to instructions in the recited tangible computer-readable storage devices. Such logical operations can be implemented as modules configured to control the processor 110 to perform particular functions according to the programming of the module. For example, FIG. 1 illustrates three modules Mod1 132, Mod2 134 and Mod3 136 which are modules configured to control the processor 110. These modules may be stored on the storage device 130 and loaded into RAM 125 or memory 115 at runtime or may be stored in other computer-readable memory locations.

One or more parts of the example computing device 100, up to and including the entire computing device 100, can be virtualized. For example, a virtual processor can be a software object that executes according to a particular instruction set, even when a physical processor of the same type as the virtual processor is unavailable. A virtualization layer or a virtual "host" can enable virtualized components of one or more different computing devices or device types by translating virtualized operations to actual operations. Ultimately however, virtualized hardware of every type is implemented or executed by some underlying physical hardware. Thus, a virtualization compute layer can operate on top of a physical compute layer. The virtualization compute layer can include one or more of a virtual machine, an overlay network, a hypervisor, virtual switching, and any other virtualization application.

The processor 110 can include all types of processors disclosed herein, including a virtual processor. However, when referring to a virtual processor, the processor 110 includes the software components associated with executing the virtual processor in a virtualization layer and underlying hardware necessary to execute the virtualization layer. The system 100 can include a physical or virtual processor 110 that receive instructions stored in a computer-readable storage device, which cause the processor 110 to perform certain operations. When referring to a virtual processor 110, the system also includes the underlying physical hardware executing the virtual processor 110.

FIG. 1B illustrates a schematic block diagram 150 of an example cloud architecture 152 including nodes/devices interconnected by various methods of communication. Cloud 152 can be a public, private, and/or hybrid cloud system. Cloud 152 can include resources, such as one or more Firewalls 166; Load Balancers 170; WAN optimization platforms 160; devices 172, such as switches, routers, intrusion detection systems, Auto VPN systems, or any hardware or software network device; servers 168, such as dynamic host configuration protocol (DHCP), domain naming system (DNS), or storage servers; virtual machines (VMs) 172; controllers 164, such as a cloud controller or a management device; or any other resource.

Cloud resources can be physical, software, virtual, or any combination thereof. For example, a cloud resource can include a server running one or more VMs or storing one or more databases. Moreover, cloud resources can be provisioned based on requests (e.g., client or tenant requests), schedules, triggers, events, signals, messages, alerts, agreements, necessity, or any other factor. For example, the cloud 152 can provision application services, storage services, management services, monitoring services, configuration services, administration services, backup services, disaster recovery services, bandwidth or performance services, intrusion detection services, VPN services, or any type of services to any device, server, network, client, or tenant.

In addition, cloud 152 can handle traffic and/or provision services. For example, cloud 152 can provide configuration services, such as auto VPN, automated deployments, automated wireless configurations, automated policy implementations, and so forth. In some cases, the cloud 152 can collect data about a client or network and generate configuration settings for specific service, device, or networking deployments. For example, the cloud 152 can generate security policies, subnetting and routing schemes, forwarding schemes, NAT settings, VPN settings, and/or any other type of configurations. The cloud 152 can then push or transmit the necessary data and settings to specific devices or components to manage a specific implementation or deployment. For example, the cloud 152 can generate VPN settings, such as IP mappings, port number, and security information, and send the VPN settings to specific, relevant device(s) or component(s) identified by the cloud 152 or otherwise designated. The relevant device(s) or component(s) can then use the VPN settings to establish a VPN tunnel according to the settings. As another example, the cloud 152 can generate and manage network diagnostic tools or graphical user interfaces.

To further illustrate, cloud 152 can provide specific services for client A (154), client B (156), and client C (158). For example, cloud 152 can deploy a network or specific network components, configure links or devices 162, automate services or functions, or provide any other services for client A (154), client B (156), and client C (158). Other non-limiting example services by cloud 152 can include network administration services, network monitoring services, content filtering services, application control 164, WAN optimization 160, server services 168, firewall services 166, gateway services, virtual machines, storage services 162, protocol configuration services, wireless deployment services, load balancing services, and so forth. Some of the above services are shown in FIG. 1B and others are not.

To this end, client A (154), client B (156), and client C (158) can connect with cloud 152 through networks 174, 176, and 178, respectively. More specifically, client A (154), client B (156), and client C (158) can each connect with cloud 152 through networks 174, 176, and 178, respectively, in order to access resources from cloud 152, communicate with cloud 152, or receive any services from cloud 152. Networks 174, 176, and 178 can each refer to a public network, such as the Internet; a private network, such as a LAN; a combination of networks; or any other network, such as a VPN or an overlay network.

Moreover, client A (154), client B (156), and client C (158) can each include one or more networks. For example, client A (154), client B (156), and client C (158) can each include one or more LANs and VLANs. In some cases, a client can represent one branch network, such as a LAN, or multiple branch networks, such as multiple remote networks. For example, client A (154) can represent a single LAN network or branch, or multiple branches or networks, such as a branch building or office network in Los Angeles and another branch building or office network in New York. If a client includes multiple branches or networks, the multiple branches or networks can each have a designated connection to the cloud 152. For example, each branch or network can maintain a tunnel to the cloud 152. Alternatively, all branches or networks for a specific client can connect to the cloud 152 via one or more specific branches or networks. For example, traffic for the different branches or networks of a client can be routed through one or more specific branches or networks. Further, client A (154), client B (156), and client C (158) can each include one or more routers, switches, appliances, client devices, VMs, or any other devices.

Each client can also maintain links between branches. For example, client A (154) can have two branches, and the branches can maintain a link between each other. Thus, in some cases, branches can maintain a tunnel between each other, such as a VPN tunnel. Moreover, the link or tunnel between branches can be generated and/or maintained by the cloud 152. For example, the cloud 152 can collect network and address settings for each branch and use those settings to establish a tunnel between branches. In some cases, the branches can use a respective tunnel between the respective branch and the cloud 152 to establish the tunnel between branches. For example, branch 1 can communicate with cloud 152 through a tunnel between branch 1 and cloud 152 to obtain the settings for establishing a tunnel between branch 1 and branch 2. Branch 2 can similarly communicate with cloud 152 through a tunnel between branch 2 and cloud 152 to obtain the settings for the tunnel between branch 1 and branch 2.

In some cases, cloud 152 can maintain information about each client network, in order to provide or support specific services for each client, such as security or VPN services. Cloud 152 can also maintain one or more links or tunnels to client A (154), client B (156), and/or client C (158). For example, cloud 152 can maintain a VPN tunnel to one or more devices in client A's network. In some cases, cloud 152 can configure the VPN tunnel for a client, maintain the VPN tunnel, or automatically update or establish any link or tunnel to the client or any devices of the client.

The cloud 152 can also monitor device and network health and status information for client A (154), client B (156), and client C (158). To this end, client A (154), client B (156), and client C (158) can synchronize information with cloud 152. Cloud 152 can also manage and deploy services for client A (154), client B (156), and client C (158). For example, cloud 152 can collect network information about client A (154) and generate network and device settings to automatically deploy a service for client A (154). In addition, cloud 152 can update device, network, and service settings for client A (154), client B (156), and client C (158).

Those skilled in the art will understand that the cloud architecture 152 can include any number of nodes, devices 162, links, networks, or components. In fact, embodiments with different numbers and/or types of clients, networks, nodes, cloud components, servers, software components, devices, virtual or physical resources, configurations, topologies, services, appliances, deployments, or network devices are also contemplated herein. Further, cloud 152 can include any number or type of resources, which can be accessed and utilized by clients or tenants. The illustration and examples provided herein are for clarity and simplicity.

Moreover, as far as communications, packets (e.g., traffic and/or messages) can be exchanged among the various nodes and networks in the cloud architecture 150 using specific network protocols. In particular, packets can be exchanged using wired protocols, wireless protocols, security protocols, OSI-Layer specific protocols, or any other protocols. Some non-limiting examples of protocols can include protocols from the Internet Protocol Suite, such as TCP/IP; OSI (Open Systems Interconnection) protocols, such as L1-L7 protocols; routing protocols, such as RIP, IGP, BGP, STP, ARP, OSPF, EIGRP, NAT; or any other protocols or standards, such as HTTP, SSH, SSL, RTP, FTP, SMTP, POP, PPP, NNTP, IMAP, Telnet, SSL, SFTP, WIFI, Bluetooth, VTP, ISL, IEEE 802 standards, L2TP, IPSec, etc. In addition, various hardware and software components or devices can be implemented to facilitate communications both within a network and between networks. For example, switches, hubs, routers, access points (APs), antennas, network interface cards (NICs), modules, cables, firewalls, servers, repeaters, sensors, etc.

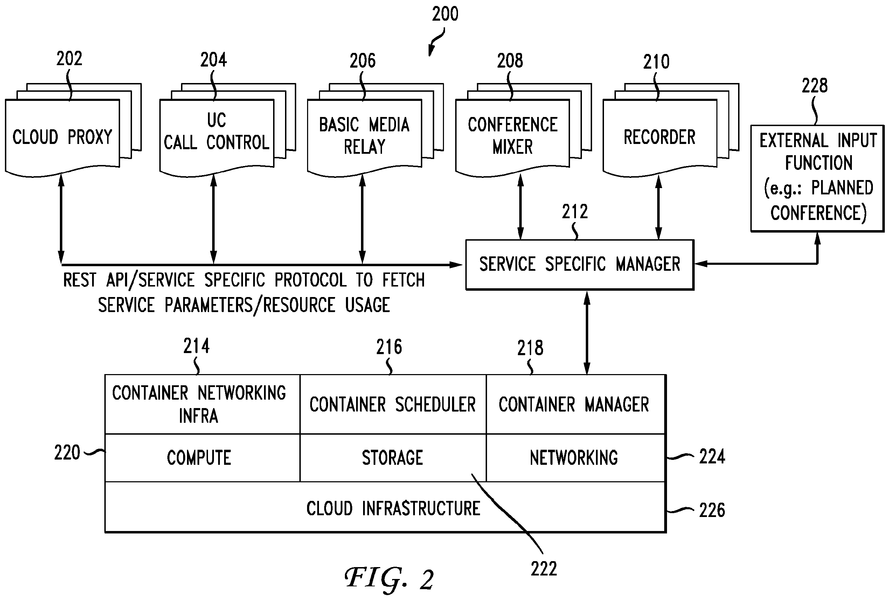

Having discussed the basic computing components that can apply to a system example of the present disclosure, we now turn to FIG. 2. FIG. 2 shows a generic container architecture 200 where a cloud infrastructure 226 hosts multiple container services 214, 216, 218, 220, 222, 224. These container services may be running on the same host or distributed across multiple hosts in a network. The cloud infrastructure 226 will have a container networking infrastructure (e.g., DOCKER networking infrastructure) 214 that handles networking / connecting multiple container instances. A container scheduler 216 performs scaling and load-balancing of containers. The scheduler 216 can be part of existing container scaling/orchestration tools like DOCKERSWARM, KUBERNETES or CLOUDIFY.

The container scheduler 216 can have a container manager 218 that will monitor the container services and automatically scale them up or down. Each service farm 200 will have a service specific manager 212 which itself can be an application running on a container. The service specific manager 212 will monitor a group of related services 202, 204, 206, 208, 210. Groupings of services can be done based on the functionality they deliver. The service specific manager 212 can be part of the group. The communication between the service specific manager 212 and the respective services can be through any protocol such as the representational state transfer (REST) application programming interface (API) which is a service specific protocol to fetch service parameters and resource usage from the various services.

As shown in FIG. 2, a set of applications 202, 204, 206, 208, 210 delivers different collaboration services. The services are monitored by the service specific manager 212 which understands the language that the services speak, through use of the REST API or other protocol. The goal is to provide a more advanced approach to scaling up or down application containers. In order to provide greater flexibility in making scaling decisions, the service specific manager 212 periodically polls the services for usage of different application resources/parameters for each service in the respective service group 202, 204, 206, 208, 210. For example, in FIG. 2, the service specific manager 212 can poll the cloud proxy service 202 for a number of SIP (session initiation protocol) sessions that it is currently proxying. The same service manager 212 can poll the media relay service 206 for the number of active relay sessions, codecs used in each session, packets received/sent for each session, bandwidth used, number of users in a conference session or web session, location-based information about users, applications, application usage, bandwidth usage, location of bandwidth usage, time-based data, etc. One or more of each of these parameters can be received. All of this data is gathered as information or polled data to the service specific manager 212. These parameters can be called "feedback" provided from the respective services.

The service specific manager 212 collates the information, feedback and/or parameters for each service and derives a weight for the values. The service specific manager 212 can also gather data from external sources 228. The weighted data is communicated to the container manger 218 in a state usable by the container manger 218. The weight is preferably in a generic state or can be represented as a service independent parameter which the underlying container manager 218 can use to create multiple instances of a service. In one example, if a location-specific data center needs to be spawned with certain bandwidth values, the service specific manager 212 can utilize the feedback and/or external information 228 to determine that there is an expected load on a conferencing service at a particular location. The parameters can be collated and modified for consumption and processing by the container manager 218 which can understand what the expected load will be and can manage the creation of new service instances to handle the load. In this example, legal requirements can require the service instances to be spawned only within a particular country, state, or any geographic boundary, or during a specific time frame. In this case, the weighting of parameters might be adjusted such that any geographic data related to any parameter (i.e., bandwidth along a certain path or hardware resources within the country) may be given a higher value in the analysis. The respective service feedback then can be used to trigger proactive scaling or dynamic scaling to adapt to predicted needs based on the new and varied application/service feedback. The feedback can also be essentially in a feedback loop such that when some data is provided, a first scaling can be initiated. Additional feedback can continue to dynamically adjust the amount of scaling at a higher or lower rate for a second scaling based on the additional feedback.

The system can include several service specific managers 212 as well. For example, multiple service specific managers 212 could be assigned to security services and another set assigned to VoIP services. Each set could process their respective data and interact with a single container manager 218.

In another example, the service specific manager 212 may derive a tuple {serviceID, weightValue, locationPreferred, BWvalue} to pass to the container manager 218. In this example, the parameters sent in the tuple are one or more of: a 'serviceID' which uniquely identifies a service; a 'weightValue' that is a integer value derived by service manager from application resource that it learns; a 'locationPreferred' parameter which is an optional parameter that is passed in cases where the service manager learns where majority of participants joining conference are from. This information can used by the container manager 218 to create additional instances of that service on a data center close to participants; a 'BWValue' which indicates the required bandwidth based on session type (audio, video, application and its parameters like codec etc.) that the service specific manager 212 learns. This information can be used container manager 218 to manage creation of container instances on distributed hosts.

The service specific manager 212 can also contact external applications 228 like an email server, messaging service, social media service, calendaring application, location-based server, and so forth to learn future planned events for the farm of services it manages. The service specific manager 212 can use this information along with the polled data from service to derive the 'weightValue' for a service. The external data can provide valuable information by way of capacity planning which can including timing information (i.e., calendar information for the collaboration group), location information (i.e., where are most participants and thus where will bandwidth be needed), and so forth. The external data will be helpful in converting or weighting the parameters that are provided to the container manager 218.

For example, if the service specific manager 212 knows there is a planned All-Hands in the company meeting that needs additional conference mixer sessions, the service specific manager 212 can set the weightValue appropriately so that the container manager 218 can create additional instances of conference mixer service. Once the service specific manager 212 constructs the tuple {serviceID, weightValue, locationPreferred, BWvalue}, it will pass the tuple to the container manager 218. The container manager 218, apart from monitoring existing generic resource parameters (like CPU, memory, filesystem, and network usage statistics), will also use the information in the tuple to more effectively manage (scaling up/down) of container services. The service specific manager 212 among other things may use the application characteristics to decide on how to scale a service. For e.g; a container hosting a media engine (like RTP forwarder, TURN relay) will have specific requirements for jitter/latency (like very low latency). Any such application characteristic, such as an amount or a threshold value for jitter or latency, a quality of video/audio compression, a bandwidth required, QoS issues, or SLA requirements can be quantified or identified as a value or parameter in a tuple.

An example of application characteristics can include, for a real-time application like IP telephony-service / conference-service hosted from a cloud, parameters like session or application type (audio, video, application data), codecs used, number of participants in a conference, etc. These types of parameters can be of benefit when the system makes scaling decisions. An example of planned application usage is to predict the scaling needs of an application based on identified planned events learned from external sources such as an enterprise calendar which references an event (e.g., a planned company All-Hands that need additional media streaming resources). Based on the event, the system can appropriately scale up/down all the services needed. Another example of application characteristics that can impact scaling is based on information such as a geo-location (e.g., geographic location from which the a significant percentage of users are going to join) or legal / compliance requirements (HIPAA, SOX, CDP, etc.) of a cloud application (e.g., in some countries IP telephony cloud service may have a legal requirement (such as Customer Data Protection - CDP) to always host the cloud service from within the country limits). Cloud application metadata such as this can impact the scaling up/down of services and can be done from the appropriate data center.

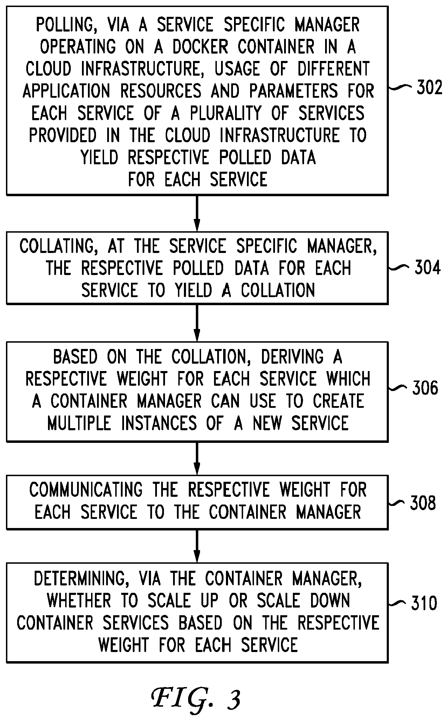

FIG. 3 illustrates a method aspect of this disclosure. A method includes polling, via a service specific manager operating on a software container in a cloud infrastructure, usage of different application resources and parameters for each service of a plurality of services provided in the cloud infrastructure to yield respective polled data for each service (302), collating, at the service specific manager, the respective polled data for each service to yield a collation (304), and based on the collation, deriving a respective weight for each service which a container manager can use to create multiple instances of a new service (306). The method further includes communicating the respective weight for each service to the container manager (308) and determining, via the container manager, whether to scale up or scale down container services based on the respective weight for each service (310).

The method can further include receiving, at the service specific manager 218, external data 228 and combining the external data into the collation. The external data can include data from one or more of an email source, a calendaring source, a social networking source, a messaging source, a news source, a weather source, and a conferencing source. The system can predict a future event based on at least one of the external data and the respective polled data. The system can also combining a future event, predicted event, or suggested event, within a collation. The collation can be representation by the tuple discussed above.

The respective weight for each service is stored as a tuple of values. The tuple of values includes a parameter comprising one or more of a service identification parameter, a weight value, a location value, a preferred location value, a bandwidth value, a memory value, a time-related value, a starting value, a predicted ending value, a type of data, a calendar event, a compliance value, a country value, a codec, a participant value, a number of participants, a quality of service value, a cost value, a throttling value, application, a country value, a geographic area value, a legal value, a cost value, and a reputation score. The values in the tuple are structured so as to be a generic set of values that is service independent.

The various aspects disclosed herein can be implemented as hardware, firmware, and/or software logic embodied in a tangible, *i.e.,* non-transitory, medium that, when executed, is operable to perform the various methods and processes described above. That is, the logic may be embodied as physical arrangements, modules, or components. A tangible medium may be substantially any computer-readable medium that is capable of storing logic or computer program code which may be executed, *e.g.,* by a processor or an overall computing system, to perform methods and functions associated with the examples. Such computer-readable mediums may include, but are not limited to including, physical storage and/or memory devices. Executable logic may include, but is not limited to including, code devices, computer program code, and/or executable computer commands or instructions.

It should be appreciated that a computer-readable medium, computer-readable storage device, or a machine-readable medium excludes signals or signals embodied in carrier waves.

The steps associated with the methods of the present disclosure may vary widely. Steps or features from one example may be added, removed, altered, combined with other examples, and reordered without departing from the spirit of the scope of the present disclosure. Therefore, the present examples are to be considered as illustrative and not restrictive, and the examples is not to be limited to the details given herein, but may be modified within the scope of the appended claims.

Further aspects and preferred features of the invention are set out in the following numbered clauses.
1. A method comprising:
   polling, via a service specific manager operating on a software container in a cloud infrastructure, each service of a plurality of services provided in the cloud infrastructure to yield respective polled data for each service;
   collating, at the service specific manager, the respective polled data for each service to yield a collation;
   based on the collation, deriving a respective weight for each service which a container manager can use to create multiple instances of a new service;
   communicating the respective weight for each service to the container manager; and
   determining, via the container manager, whether to scale up or scale down container services based on the respective weight for each service.
2. The method of clause 1, further comprising:
   receiving, at the service specific manager, external data; and
   combining the external data into the collation.
3. The method ofclause 2, wherein the external data comprises data from one or more of an email source, a calendaring source, a social networking source, a messaging source, a news source, a weather source, legal information, geographical information, bandwidth information, participant information and a conferencing source.
4. The method ofclause 2 or 3, further comprising:
   predicting a future event based on at least one of the external data and the respective polled data.
5. The method ofclause 4, further comprising combining the future event with the collation.
6. The method of any of clauses 1 to 5, wherein the respective polled data comprises one or more of a service identification parameter, a weight value, a location value, a preferred location value, a bandwidth value, a memory value, a time-related value, a starting value, a predicted ending value, a type of data, a calendar event, a compliance value, a country value, a codec, a participant value, a number of participants, a quality of service value, a cost value, a throttling value, a country value, a geographic area value, a legal value and a reputation score.
7. The method of any of clauses 1 to 6, wherein the respective weight for each service comprises a tuple of values.
8. The method of clause 7, wherein the tuple of values comprises a generic set of values that is service independent.
9. A system comprising:
   a processor; and
   a computer-readable medium, storing instructions which, when executed by the processor, cause the processor to perform operations comprising:
      polling, via a service specific manager operating on a software container in a cloud infrastructure, each service of a plurality of services provided in the cloud infrastructure to yield respective polled data for each service;
      collating, at the service specific manager, the respective polled data for each service to yield a collation;
      based on the collation, deriving a respective weight for each service which a container manager can use to create multiple instances of a new service;
      communicating the respective weight for each service to the container manager; and
      determining, via the container manager, whether to scale up or scale down container services based on the respective weight for each service.
10. The system of clause 9, the computer-readable medium storing additional instructions which, when executed by the processor, cause the processor to perform further operations comprising:
   receiving, at the service specific manager, external data; and
   combining the external data into the collation.
11. The system of clause 10, wherein the external data comprises data from one or more of an email source, a calendaring source, a social networking source, a messaging source, a news source, a weather source, and a conferencing source.
12. The system of clause 10 or 11, the computer-readable medium storing additional instructions which, when executed by the processor, cause the processor to perform further operations comprising:
   predicting a future event based on at least one of the external data and the respective polled data.
13. The system of clause 12, the computer-readable medium storing additional instructions which, when executed by the processor, cause the processor to perform further operations comprising combining the future event with the collation.
14. The system of any of clauses 9 to 13, wherein the respective polled data comprises one or more of a service identification parameter, a weight value, a location value, a preferred location value, a bandwidth value, a memory value, a time-related value, a starting value, a predicted ending value, a type of data, a calendar event, a compliance value, a country value, a codec, a participant value, a number of participants, a quality of service value, a cost value, a throttling value, a country value, a geographic area value, a legal value and a reputation score.
15. The system of any of clauses 9 to 14, wherein the respective weight for each service comprises a tuple of values.
16. The system of clause 5, wherein the tuple of values comprises a generic set of values that is service independent.
17. A computer-readable storage device storing instructions which, when executed by a processor, cause the processor to perform operations comprising:
   polling, via a service specific manager operating on a software container in a cloud infrastructure, each service of a plurality of services provided in the cloud infrastructure to yield respective polled data for each service;
   collating, at the service specific manager, the respective polled data for each service to yield a collation;
   based on the collation, deriving a respective weight for each service which a container manager can use to create multiple instances of a new service;
   communicating the respective weight for each service to the container manager; and
   determining, via the container manager, whether to scale up or scale down container services based on the respective weight for each service.
18. The computer-readable storage device of clause 17, the computer-readable storage device storing additional instructions which, when executed by the processor, cause the processor to perform further operations comprising:
   receiving, at the service specific manager, external data; and
   combining the external data into the collation.
19. The computer-readable storage device of clause 18, wherein the external data comprises data from one or more of an email source, a calendaring source, a social networking source, a messaging source, a news source, a weather source, and a conferencing source.
20. The computer-readable storage device of clause 18 or 19, the computer-readable storage device storing additional instructions which, when executed by the processor, cause the processor to perform further operations comprising:
   predicting a future event based on at least one of the external data and the respective polled data.
21. Apparatus comprising:
   means for polling, via a service specific manager operating on a software container in a cloud infrastructure, each service of a plurality of services provided in the cloud infrastructure to yield respective polled data for each service;
   means for collating, at the service specific manager, the respective polled data for each service to yield a collation;
   means for deriving, based on the collation, a respective weight for each service which a container manager can use to create multiple instances of a new service;
   means for communicating the respective weight for each service to the container manager; and
   means for determining, via the container manager, whether to scale up or scale down container services based on the respective weight for each service.
22. The apparatus according to clause 21 further comprising means for implementing the method according to any of clauses 2 to 8.
23. A computer program, computer program product or logic encoded on a tangible computer readable medium comprising instructions for implementing the method according to any one ofclauses 1 to 8.

## Claims

1. A method comprising:
operating a plurality of applications providing a plurality of services in a cloud infrastructure;
polling, via a service specific manager operating on a software container in the cloud infrastructure, each service of the plurality of services to yield respective polled data for each service, wherein, for each service, the polled data comprises service parameters and resource usage relating to the service and is obtained from the service using a service specific protocol;
collating, at the service specific manager, the respective polled data for each service to yield a collation;
based on the collation, deriving a respective weight for each service which a container manager can use to create multiple instances of a new service, wherein the weight is represented as a service independent parameter;
communicating the respective weight for each service to the container manager;
determining, via the container manager, whether to scale up or scale down container services based on the respective weight for each service; and
performing a scaling operation in accordance with the determination.

2. The method of claim 1, further comprising:
receiving, at the service specific manager, external data; and
combining the external data into the collation.

3. The method of claim 2, wherein the external data comprises data from one or more of an email source, a calendaring source, a social networking source, a messaging source, a news source, a weather source, legal information, geographical information, bandwidth information, participant information and a conferencing source.

4. The method of claim 2 or 3, further comprising:
predicting a future event based on at least one of the external data and the respective polled data.

5. The method of claim 4, further comprising combining the future event with the collation.

6. The method of any of claims 1 to 5, wherein the respective polled data comprises one or more of a service identification parameter, a weight value, a location value, a preferred location value, a bandwidth value, a memory value, a time-related value, a starting value, a predicted ending value, a type of data, a calendar event, a compliance value, a country value, a codec, a participant value, a number of participants, a quality of service value, a cost value, a throttling value, a country value, a geographic area value, a legal value and a reputation score.

7. The method of any of claims 1 to 6, wherein the respective weight for each service comprises a tuple of values, wherein the tuple of values comprises a generic set of values that is service independent.

8. The method according to any of the preceding claims, wherein the respective weight for each service comprises one or more of, preferably each of: a service identifier, a weight value, a preferred location parameter and a required bandwidth value.

9. The method according to any of the preceding claims, wherein the services comprise a service related to provision of a conference, wherein the weight comprises a preferred location parameter relating to a location of a majority of conference participants, the container manager using the parameter to create additional instances of a service on a data center close to conference participants.

10. The method according to any of the preceding claims, wherein the services comprise collaboration services, optionally comprising one or more of: a cloud relay service, a call control service, a media relay service, a conference mixer service and a recorder service.

11. The method according to any of the preceding claims, wherein the services comprise a cloud proxy service and wherein the polled data comprises a number of SIP (session initiation protocol) sessions that the service is currently proxying.

12. The method of any of the preceding claims, wherein the services comprise a media relay service and the polled data comprises one or more of: the number of active relay sessions, codecs used in each session, packets received/sent for each session, bandwidth used, number of users in a conference session or web session, location-based information about users, applications, application usage, bandwidth usage, location of bandwidth usage, and time-based data.

13. The method of any of the preceding claims, comprising a plurality of service-specific managers associated with respective services, each arranged to process respective data from services and interact with the container manager.

14. A system comprising means for performing a method as set out in any of the preceding claims.

15. A computer program, computer program product or logic encoded on a tangible computer readable medium comprising instructions for implementing the method according to any one of claims 1 to 13.
